# EUROPÄISCHE PATENTANMELDUNG

(11) **EP 4 122 771 A1**
(43) Veröffentlichungstag der Anmeldung: **25.01.2023**
(21) Anmeldenummer: 22180916.3
(22) Anmeldetag: 24.06.2022
(51) Int. Cl.: B60R 9/10

(54) **TRÄGERSYSTEM FÜR EIN ZWEIRAD**

(30) Priorität: 22.07.2021 DE 102021207883
(71) Anmelder: ATERA GmbH, 88299 Leutkirch im Allgäu (DE)
(72) Erfinder: Kurilov, Pavel, 87600 Kaufbeuren (DE); Raida, Hans-Joachim, 42799 Leichlingen (DE)
(74) Vertreter: Patentanwälte Ruff, Wilhelm, Beier, Dauster & Partner mbB

(57) **Zusammenfassung**

Ein Trägersystem mit einer Trägerschiene sowie mit einer Radschale zur Stützung eines Rads des Zweirads, die auf der Trägerschiene verschiebbar geführt ist, und der eine Arretiereinrichtung zur Positionsfixierung der Radschale an der Trägerschiene zugeordnet ist, ist bekannt.

Erfindungsgemäß ist die Arretiereinrichtung als manuell bedienbare Schnellspanneinrichtung ausgebildet.

Einsatz für Fahrradheckträger an Personenkraftwagen

## Beschreibung

Die Erfindung betrifft ein Trägersystem für ein Zweirad mit einer Trägerschiene sowie mit einer Radschale zur Stützung eines Rads des Zweirads, die auf der Trägerschiene verschiebbar geführt ist, und der eine Arretiereinrichtung zur Positionsfixierung der Radschale an der Trägerschiene zugeordnet ist.

Ein derartiges Trägersystem ist für Fahrzeugdachträger oder Fahrzeugheckträger allgemein bekannt. Das bekannte Trägersystem weist mehrere Trägerschienen auf, die jeweils mit zwei Radschalen versehen sind, um das Vorderrad und das Hinterrad des entsprechenden Zweirads stützen und fixieren zu können. Die Radschalen sind entlang der Trägerschiene verschiebbar geführt und werden mithilfe von Flügelschrauben in einer definierten Position relativ zur Trägerschiene fixiert.

Aus der DE 10 2010 015 652 B4 ist ein Trägersystem für ein Fahrrad bekannt, bei dem eine Radschale an einer Trägerschiene gehalten ist, die mit einem flexiblen Rastband und einer Ratscheneinrichtung versehen ist. Das Rastband und die Ratscheneinrichtung sind an gegenüberliegenden Seiten eines Radschalengehäuses der Radschale gehalten.

Aufgabe der Erfindung ist es, ein Trägersystem der eingangs genannten Art zu schaffen, das eine komfortable und sichere Montage und Demontage eines Zweirads auf der Trägerschiene ermöglicht.

Diese Aufgabe wird dadurch gelöst, dass die Arretiereinrichtung als manuell bedienbare Schnellspanneinrichtung ausgebildet ist. Vorzugsweise ist die Schnellspanneinrichtung einhändig bedienbar, so dass eine Bedienperson mit einer Hand das Zweirad halten kann und mit der anderen Hand die Schnellspanneinrichtung bedienen kann. Die erfindungsgemäße Lösung eignet sich für alle Arten von Zweirädern, insbesondere für Fahrräder, für E-Bikes, für Mofas, für Roller, für Leichtkrafträder oder für andere einspurige Kraftfahrzeuge wie Motorräder. Unter einer Schnellspanneinrichtung werden Arretiereinrichtungen verstanden, die bei einem Spannvorgang einen großen Spannweg in kurzer Zeit zurücklegen können, wie insbesondere eine Hebelkinematik, eine Ratscheneinrichtung oder Ähnliches. Voraussetzung für die Schnellspanneinrichtung ist es, dass in kurzer Zeit eine Überführung eines Arretierelements aus einer Freigabestellung in eine Arretierstellung vorgesehen ist.

In Ausgestaltung der Erfindung ist die Schnellspanneinrichtung als Exzenterspanneinheit gestaltet und weist einen manuell bedienbaren Exzenterhebel auf, der in Hochrichtung nach unten in eine Sperrstellung und in Hochrichtung nach oben in eine Freigabestellung überführbar ist. Die Hochrichtung ist bezogen auf ein der Trägerschiene zugeordnetes Koordinatensystem, so dass eine Längsrichtung einer Längserstreckung der Trägerschiene, eine Querrichtung einer Breitenerstreckung der Trägerschiene und eine Hochrichtung einer orthogonal zu der Quererstreckung und der Längserstreckung ausgerichteten Erstreckung entsprechen. Dadurch, dass der Exzenterhebel durch eine Bewegung nach unten in seine Arretierstellung überführt wird, ist eine ergonomisch günstige Bedienbarkeit durch eine Bedienperson gegeben. Eine Bewegung nach unten ermöglicht durch eine Bedienperson eine höhere Kraftaufbringung als eine Bewegung in entgegengesetzter Richtung. Der Exzenterhebel ist vorzugsweise in Längsrichtung ausgerichtet und für eine Schwenkbewegung in Hochrichtung aus dieser Längserstreckung heraus beweglich. Damit ist der Exzenterhebel vorteilhaft in einer Schwenkebene schwenkbeweglich gelagert, die durch die Hochrichtung und die Längsrichtung der Trägerschiene aufgespannt ist. Der Exzenterhebel weist eine exzentrische Kurvenscheibe auf, die bei einer Schwenkbewegung des Exzenterhebels mit zunehmendem Schwenkweg ein erhöhtes Drehmoment ausübt, das auf ein Klemmstück, das der Arretiereinrichtung, d.h. der Schnellspanneinrichtung, zugeordnet ist, wirkt, um die Radschale relativ zur Trägerschiene zu verklemmen, eine Hubbewegung in Hochrichtung ausübt.

In weiterer Ausgestaltung der Erfindung ist der Exzenterhebel innerhalb eines Gehäuseabschnitts eines Radschalengehäuses der Radschale angeordnet und ragt durch eine Öffnung des Gehäuseabschnitts derart über den Gehäuseabschnitt nach außen ab, dass der Exzenterhebel manuell ergreifbar ist. Der Exzenterhebel ist in der Längsrichtung des Radschalengehäuses, d. h. in Längserstreckungsrichtung der Trägerschiene, in dem Gehäuseabschnitt ausgerichtet. Vorzugsweise ist die Öffnung als Schlitz gestaltet, dessen Breite geringfügig breiter ist als eine Breite des Exzenterhebels, und dessen Länge auf einen maximalen Schwenkweg des Exzenterhebels zwischen der Freigabestellung und der Sperrstellung abgestimmt ist. Der Gehäuseabschnitt überdeckt entsprechende Funktionskomponenten der Schnellspanneinrichtung und hält diese damit verschmutzungsfrei und frei von unbeabsichtigten Kontakten mit anderen Gegenständen, so dass ein Schutz gegen ein unbeabsichtigtes Lösen erzielbar ist.

In weiterer Ausgestaltung der Erfindung ist der Gehäuseabschnitt lösbar an dem Radschalengehäuse gehalten. Dadurch ist in einfacher Weise eine Zugänglichkeit zu Funktionskomponenten der Exzenterspanneinheit ermöglicht.

In weiterer Ausgestaltung der Erfindung mit einem dem Radschalengehäuse zugeordneten Sicherungsband für ein Rad des Zweirads und einer das Sicherungsband in einer Sicherungsstellung aufnehmenden und spannenden Sicherungseinheit, die an einer dem Sicherungsband gegenüberliegenden Seite eines Radschalengehäuses vorgesehen ist, ist die Schnellspanneinrichtung mit dem Sicherungsband und der Sicherungseinheit derart in Wirkverbindung, dass eine Positionsfixierung der Radschale durch die Schnellspanneinrichtung synchron zu einem Spannen des Sicherungsbands in der Sicherungseinheit erfolgt. Dadurch übernehmen das Sicherungsband und die Sicherungseinheit eine Doppelfunktion, da neben der Festzurrung des Rads an der Radschale gleichzeitig auch die Arretierung der Radschale relativ zur Trägerschiene erfolgt.

In weiterer Ausgestaltung der Erfindung weist die Schnellspanneinrichtung ein Klemmstück auf, das in der Trägerschiene angeordnet ist und in einer Klemmstellung gegen einen Hinterschnitt der Trägerschiene gepresst ist, und das Klemmstück ist an einer Trägereinheit gehalten, die in Hochrichtung beweglich in dem Radschalengehäuse gelagert ist, und das Sicherungsband und die Sicherungseinheit sind direkt oder indirekt mechanisch mit der Trägereinheit gekoppelt. Die Hochrichtung ist - wie zuvor bereits ausgeführt wurde - orthogonal zu einer Längserstreckung der Trägerschiene zu sehen. Die Trägereinheit kann linearbeweglich, schwenkbeweglich oder längs einer Kurvenbahn beweglich in dem Radschalengehäuse gelagert sein. Maßgeblich ist, dass auf das Klemmstück eine Bewegung in Hochrichtung übertragen wird, um je nach Bewegungsrichtung eine Klemmstellung oder eine Freigabestellung des Klemmstücks zu erzielen. Die Trägerschiene ist vorteilhaft als durch Strangpressen hergestelltes Hohlprofil aus einer Leichtmetalllegierung gebildet. Das Klemmstück ist vorzugsweise in einer nach oben offenen Profilnut geführt, die hinterschnitten ist, um eine formschlüssige Anlage des Klemmstücks in Hochrichtung nach oben ermöglichen zu können. Die Profilnut ist mittels eines Längsschlitzes nach oben offen, so dass sich im Querschnitt gesehen eine etwa T-förmige Profilnut ergibt. Das Klemmstück ist entweder separat hergestellt und an der Trägereinheit durch geeignete Befestigungsmittel mechanisch gehalten oder das Klemmstück ist einteilig mit der Trägereinheit gestaltet. Unter der direkten oder indirekten mechanischen Kopplung des Sicherungsbands und der Sicherungseinheit mit der Trägereinheit ist eine mechanische Wirkverbindung zwischen Sicherungsband und Sicherungseinheit sowie Trägereinheit zu verstehen, wobei die Wirkverbindung mittelbar über weitere Funktionskomponenten oder unmittelbar durch Verbindung von Sicherungsband und Sicherungseinheit mit der Trägereinheit vorgesehen sein kann.

In weiterer Ausgestaltung der Erfindung ist die Trägereinheit in einer Linearführung des Radschalengehäuses begrenzt hubbeweglich gelagert. Dadurch ist die Trägereinheit in Hochrichtung zumindest weitgehend linearbeweglich in dem Radschalengehäuse gelagert. Die Trägereinheit ist formsteif gestaltet und vorzugsweise aus wenigstens einem Metallteil hergestellt. In vorteilhafter Weise ist der Trägereinheit eine Rückstellfederanordnung zugeordnet, die die Trägereinheit relativ zum Radschalengehäuse permanent in Richtung der Klemmstellung belastet. Dadurch ist eine permanente gleitende Anlage des Klemmstücks an entsprechenden Hinterschnittschenkeln der Trägerschiene gewährleistet, so dass ein Verkanten bei einem manuellen Verschieben der Radschale in der Freigabestellung des Klemmstücks vermieden wird.

In weiterer Ausgestaltung der Erfindung ist die Trägereinheit schwenkbeweglich relativ zu dem Radschalengehäuse gelagert, und die Trägereinheit ist mit einer an dem Radschalengehäuse angeordneten Zwangsführung gekoppelt, die eine Bewegung der Trägereinheit initiiert abhängig von einem Einsetzen des Rads in das Radschalengehäuse. Diese Ausgestaltung stellt eine indirekte mechanische Kopplung des Sicherungsbands und der Sicherungseinheit mit der Trägereinheit dar, d.h. eine mittelbare Verbindung zwischen den entsprechenden Funktionskomponenten. Durch ein entsprechendes Aufsetzen und Festzurren des Rads an der Radschale mittels des Sicherungsbands und der Sicherungseinheit wird zwangsläufig die Trägereinheit derart verlagert, dass das Klemmstück in seine Klemmstellung überführt wird.

In weiterer Ausgestaltung der Erfindung weist die Zwangsführung einen federelastisch beweglichen Kontaktkörper auf, der in unbelastetem Zustand über eine Auflagefläche des Radschalengehäuses für das Rad nach oben abragt. Der Kontaktkörper wird beim Einsetzen eines Rads in die Radschale nach Art eines Tasters in die Auflagefläche des Radschalengehäuses hineingedrückt, wodurch aufgrund einer mechanischen Wirkverbindung zwischen dem Kontaktkörper und der Trägereinheit die entsprechende Bewegung des Kontaktkörpers auf das Klemmstück übertragen wird, um das Klemmstück in seine Klemmstellung zu überführen. Ein Festzurren des Sicherungsbands fixiert diese Klemmstellung zwangsläufig.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer Draufsicht eine erste Ausführungsform eines erfindungsgemäßen Trägersystems im Bereich einer Radschale,
- Fig. 2: einen Längsschnitt entlang der Schnittlinie II-II durch das Trägersystem nach Fig. 1,
- Fig. 3: einen Querschnitt durch das Trägersystem nach Fig. 2 entlang der Schnittlinie III-III in Fig. 2,
- Fig. 4: in einer Draufsicht eine weitere Ausführungsform eines erfindungsgemäßen Trägersystems im Bereich einer Radschale,
- Fig. 5: einen Längsschnitt entlang der Schnittlinie V-V durch das Trägersystem nach Fig. 4,
- Fig. 6: in vergrößerter Darstellung einen Querschnitt entlang der Schnittlinie VI-VI durch das Trägersystem gemäß Fig. 5,
- Fig. 7: in perspektivischer Darstellung eine Radschale für eine weitere Ausführungsform eines erfindungsgemäßen Trägersystems,
- Fig. 8: in einem Längsschnitt die Radschale nach Fig. 7,
- Fig. 9: eine perspektivische Explosionsdarstellung der Radschale nach den Fig. 7 und 8,
- Fig. 10: in perspektivischer Darstellung eine weitere Radschale einer weiteren Ausführungsform eines erfindungsgemäßen Trägersystems,
- Fig. 11: einen Längsschnitt durch die Radschale gemäß Fig. 10 und
- Fig. 12: in schematischer Darstellung das Funktionsprinzip des mit einer Radschale gemäß den Fig. 10 und 11 versehenen, erfindungsgemäßen Trägersystems gemäß einer letzten Ausführungsform der Erfindung.

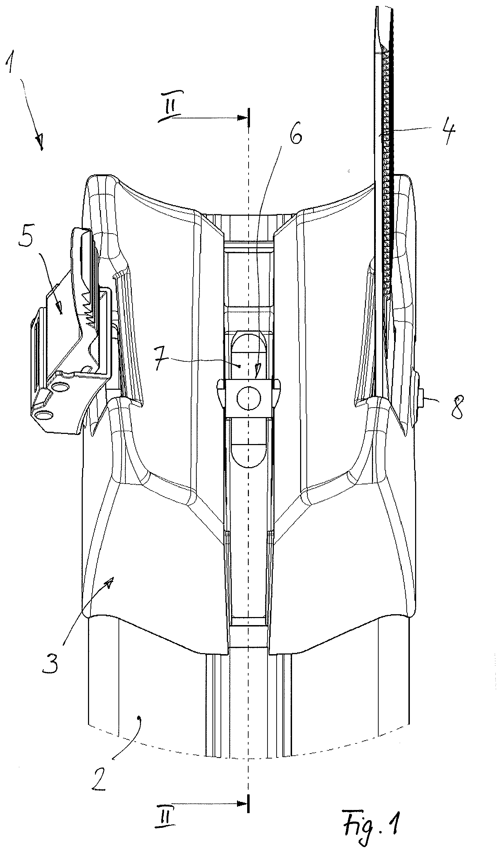

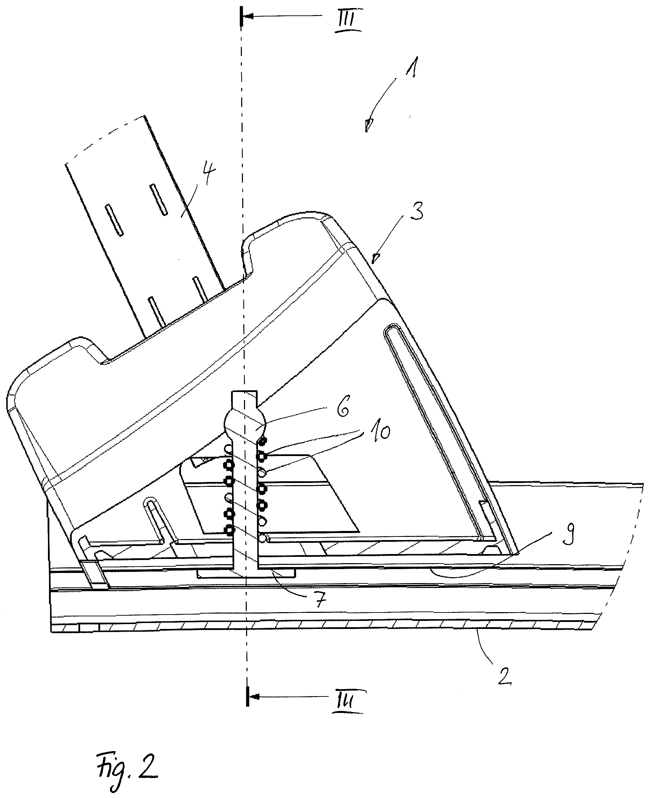

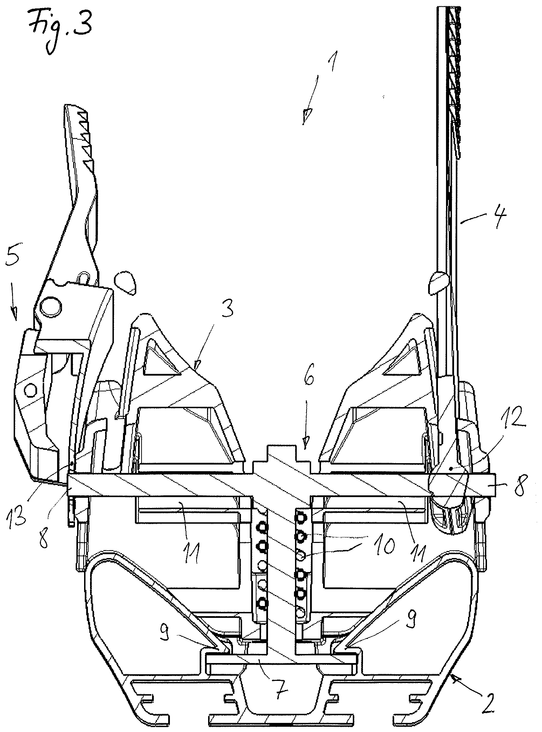

Ein Trägersystem 1 nach den Fig. 1 bis 3 ist Teil eines Fahrradheckträgers, der zum heckseitigen Anbau an ein Kraftfahrzeug, insbesondere an eine Anhängerkupplung eines Personenkraftwagens, vorgesehen ist. Der Fahrradheckträger weist einen Tragrahmen auf, auf dem wenigstens eine Trägerschiene 2 des Trägersystems 1 befestigt ist. Die Trägerschiene 2 weist wenigstens eine Länge eines Radstands eines Fahrrads auf und ist aus einer Leichtmetalllegierung in einem Strangpressverfahren als Hohlprofil hergestellt. Ein Querschnitt der Trägerschiene 2 ist anhand der Fig. 3 erkennbar. Das Hohlprofil der Trägerschiene 2 weist eine mittlere, nach oben offene Führungsnut auf, die im Querschnitt als T-Profil ausgeführt ist und auf gegenüberliegenden Seiten zwei einander zugewandte Profilschenkel 9 aufweist, die Hinterschnitte für die Führungsnut - in Hochrichtung der Trägerschiene 2 gesehen - bilden. Weitere Konturen der Trägerschiene 2 sind anhand der Fig. 1 bis 3 gut erkennbar. Auf der Trägerschiene 2 ist eine Radschale 3 abgestützt, die ein aus Kunststoff hergestelltes Radschalengehäuse aufweist. Die Radschale 3 ist längs der Trägerschiene 2 verschiebbar gelagert. Dabei ist die Radschale 3 an der Trägerschiene 2 durch ein Klemmstück 7 gehalten, das mittels einer Trägereinheit 6 mit der Radschale 3 gekoppelt ist. Das Klemmstück 7 ist längsverschiebbar in der Führungsnut der Trägerschiene 2 geführt und in Hochrichtung nach oben formschlüssig durch die als Hinterschnitte dienenden Nutschenkel 9 der Führungsnut begrenzt. Das Klemmstück 7 ist einstückig mit der Trägereinheit 6, die eine in Hochrichtung innerhalb des Radschalengehäuses erstreckte Trägersäule sowie zwei zu gegenüberliegenden Seiten hin in Querrichtung zur Trägerschiene 2 abragende Trägerfortsätze 8 aufweist. Die Trägereinheit 6 ist in einem Aufnahmebereich 11 innerhalb des Radschalengehäuses in Hochrichtung begrenzt beweglich gelagert. Eine Druckfederanordnung 10, die als die Trägersäule koaxial umgebende Schraubendruckfeder ausgeführt ist, belastet die Trägereinheit 6 permanent in Hochrichtung nach oben, so dass das Klemmstück 7 sowohl in der nachfolgend beschriebenen Klemmstellung als auch in der in Fig. 3 gezeigten Freigabestellung permanent spielfrei an der jeweiligen Unterseite der Nutschenkel 9 der Führungsnut der Trägerschiene 2 anliegt. An dem in Fig. 3 rechten Trägerfortsatz 8 ist ein flexibles Sicherungsband 4 gehalten, das durch eine entsprechende Aussparung im Radschalengehäuse nach oben ausgerichtet ist. An dem gegenüberliegenden Trägerfortsatz 8 ist eine Sicherungseinheit 5 gehalten, die eine manuell bedienbare Ratschenanordnung aufweist. Das flexible Sicherungsband 4 ist als Rastband ausgeführt. Zur Halterung des Sicherungsbands 4 auf dem vorzugsweise zylindrischen Trägerfortsatz 8 ist ein Halteabschnitt 12 am Sicherungsband 4 vorgesehen, der den Trägerfortsatz 8 umgreift. Der Sicherungseinheit 5 ist ein weiterer Halteabschnitt 13 zugeordnet, der den gegenüberliegenden Trägerfortsatz 8 umgreift und so mit der Trägereinheit 6 verbunden ist.

Die Radschale 3 ist in der in den Fig. 1 bis 3 dargestellten Positionierung längs der Trägerschiene 2 verschiebbar, wobei das Klemmstück 7 mit seiner Oberseite an der Unterseite der Nutschenkel 9 der Führungsnut entlanggleitet. Zur Befestigung eines Fahrrads auf der Trägerschiene 2 wird das Fahrrad auf der Trägerschiene 2 abgestellt, wobei ein Rad, ob Vorderrad oder Hinterrad, durch Verschieben der Radschale 3 in Richtung dieses Rads durch die Radschale 3 abgestützt wird. Anschließend wird das flexible Sicherungsband 4 durch entsprechende Speichen des Rads hindurchgefädelt und auf der gegenüberliegenden Seite in die Sicherungseinheit 5 eingeschoben und festgezurrt, wodurch das Sicherungsband 4 sich um die Felge des Rads schließt. Durch das Festzurren des Sicherungsbands 4 mittels der Ratschenanordnung wird das Rad nach unten in eine keilförmige Auflagefläche der Radschale 3 hineingepresst. Dadurch wirken auf die Halteabschnitte 12 und 13 Zugkräfte nach oben, die über die Trägerfortsätze 8 und die Trägereinheit 6 auch auf das Klemmstück 7 übertragen werden. Dies führt zu einer Verklemmung des Klemmstücks 7 an der Unterseite der Nutschenkel 9 und demzufolge zu einer Arretierung der Radschale 3 relativ zur Trägerschiene 2.

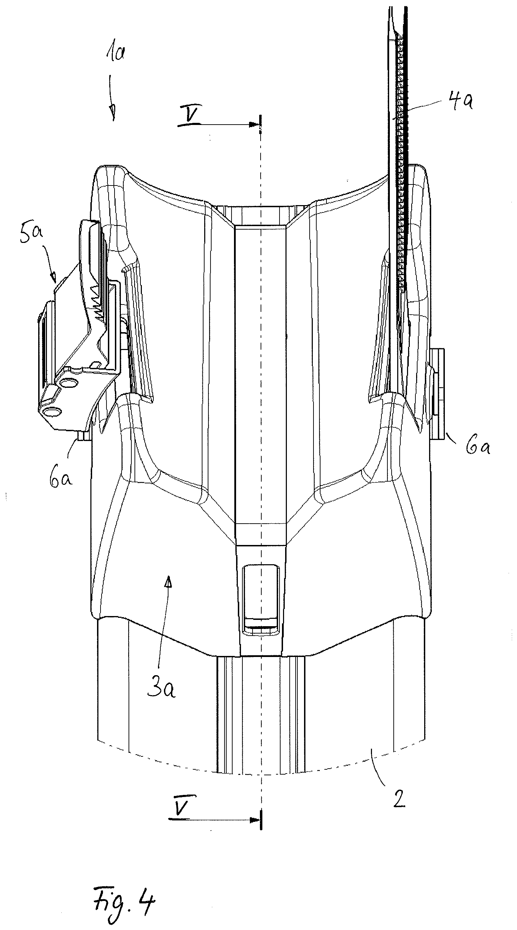

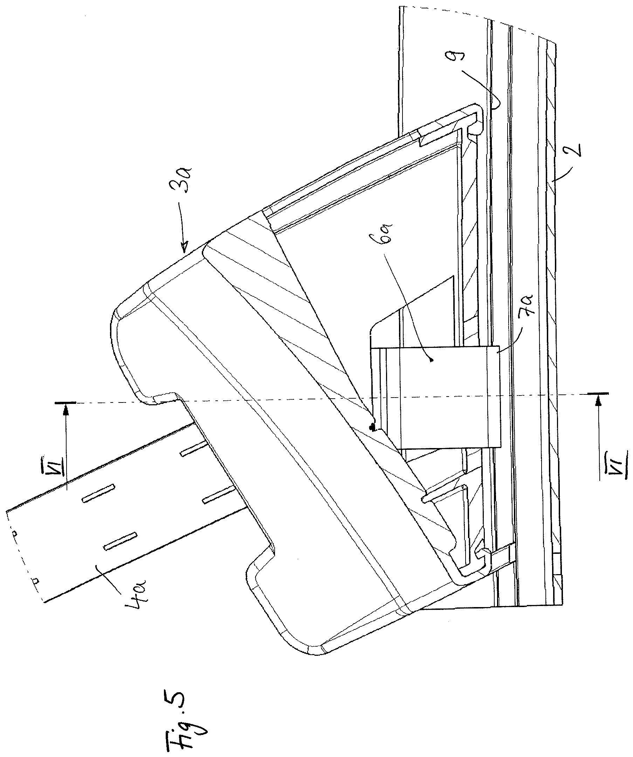

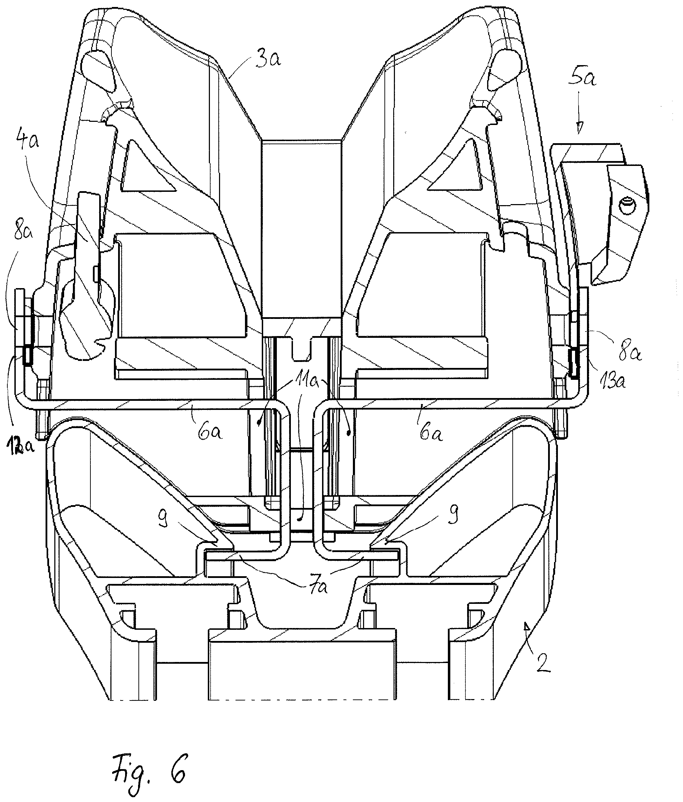

Das Trägersystem 1a nach den Fig. 4 bis 6 entspricht bezüglich seines Einsatzzwecks, seines Aufbaus und seiner Funktion weitgehend dem zuvor beschriebenen Trägersystem 1, so dass zur Vermeidung von Wiederholungen auf die Ausführungen zum Trägersystem 1 verwiesen wird. Nachfolgend werden die Unterschiede des Trägersystems 1 nach den Fig. 4 bis 6 in Relation zu dem Trägersystem 1 nach den Fig. 1 bis 3 beschrieben. Funktionsgleiche Teile und Abschnitte sind mit gleichen Bezugszeichen, jedoch unter Hinzufügung des Buchstabens a, versehen.

Bei dem Trägersystem 1a nach den Fig. 4 bis 6 ist die Trägereinheit 6a durch Metallblechwinkel gebildet, die in Aufnahmeabschnitten 11a innerhalb des Radschalengehäuses in Hochrichtung beweglich gelagert ist. Die Trägereinheit 6a weist zu gegenüberliegenden Seiten hin nach außen und nach oben abragende Schenkelabschnitte auf, die Halteabschnitte 12a und 13a für das Sicherungsband 4a einerseits und die Sicherungseinheit 5a andererseits bilden. Haltebolzen 8a dienen zur Verbindung zwischen dem entsprechenden Halteabschnitt 12a bzw. 13a und dem Sicherungsband 4a bzw. der Sicherungseinheit 5a. Die die Trägereinheit 6a bildende Metallwinkelkonstruktion ist formsteif ausgeführt. Die Metallwinkelkonstruktion weist im Bereich ihrer Unterseite zwei nach außen abragende Klemmschenkel auf, die das Klemmstück 7a bilden. Die durch die Metallwinkelkonstruktion gebildete Trägereinheit 6a ist in den Aufnahmeabschnitten 11a des Radschalengehäuses der Radschale 3a in Hochrichtung begrenzt beweglich gelagert.

Eine Klemm- und Freigabefunktion des Klemmstücks 7a bei dem Trägersystem 1a nach den Fig. 4 bis 6 entspricht der Funktion des Trägersystems 1. Dies bedeutet, dass bei Abstützung des Reifens eines Rads des Zweirads im Bereich der oberen Auflagefläche der Radschale 3a die Radschale 3a nach unten in Richtung der Trägerschiene 2 gedrückt wird. Bei einem anschließenden Umschlingen der Felge des Rads durch das Sicherungsband 4a und das Festzurren des Sicherungsbands 4a im Bereich der Sicherungseinheit 5a wird zwangsläufig aufgrund der Kopplung über die Haltebolzen 8a die Trägereinheit 6a relativ zum Radschalengehäuse nach oben gezogen, wodurch Oberseiten der Klemmschenkel der Metallwinkelkonstruktion, die das Klemmstück 7a bilden, von unten her gegen die Nutschenkel 9 der Trägerschiene 2 gepresst werden. Hierdurch ist die gewünschte Klemmwirkung erreicht.

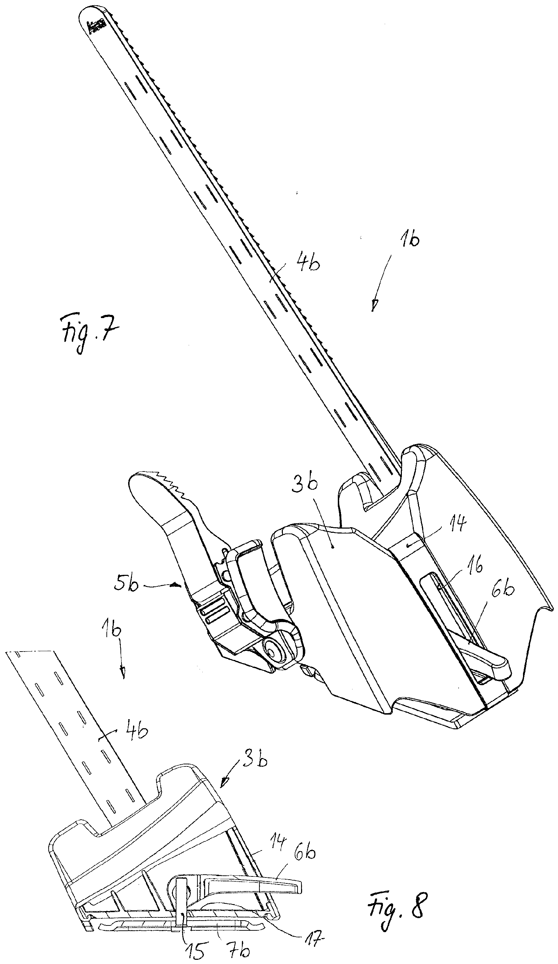

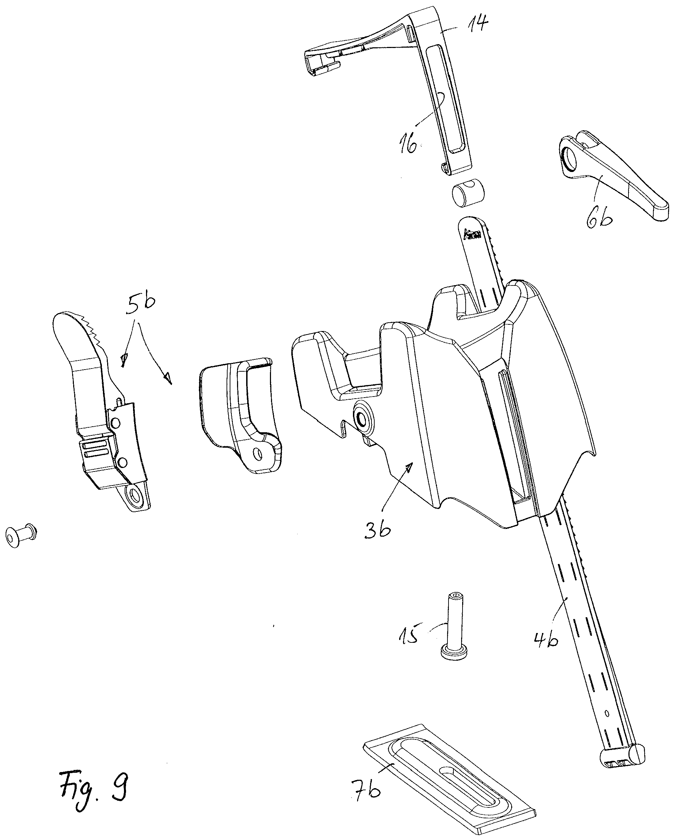

Bei der Ausführungsform nach den Fig. 7 bis 9 weist das Trägersystem 1b eine Radschale 3b mit einem aus Kunststoff hergestellten Radschalengehäuse auf, das mit einem Boden 17 versehen ist. In dem Boden 17 ist ein Trägerbolzen 15 in Hochrichtung linearbeweglich gelagert, der mit einem Exzenterhebel 6b gekoppelt ist und gemeinsam mit diesem eine Exzenterspanneinheit bildet. Der Trägerbolzen 15 ist im Bereich seiner Unterseite mit einem Klemmstück 7b verbunden, das in nicht näher dargestellter Weise in einer T-förmigen Führungsnut einer ebenfalls nicht dargestellten Trägerschiene gehalten ist. Der Exzenterhebel 6b ist auf den mit einem Außengewinde versehenen Trägerbolzen 15 aufschraubbar. Der Exzenterhebel 6b weist, wie anhand der Fig. 8 und 9 erkennbar ist, einen Exzenterkonturabschnitt auf, der auf dem Boden 17 abgestützt ist und je nach Stellung des Exzenterhebels 6b auf den Trägerbolzen 15 eine Zugkraft in Hochrichtung nach oben ausübt. An dem Radschalengehäuse sind zudem ein Sicherungsband 4b und eine Sicherungseinheit 5b angeordnet, deren Aufbau den zuvor beschriebenen Sicherungsbändern 4 und 4a bzw. Sicherungseinheiten 5 und 5a entspricht.

Anhand der Fig. 7 bis 9 ist zudem erkennbar, dass der Exzenterhebel 6b aus einem Schlitz 16 eines Gehäuseabschnitts 14 des Radschalengehäuses teilweise herausragt. Der Schlitz 16 bildet einen Längsschlitz, der entlang einer Schwenkebene des Exzenterhebels 6b ausgebildet ist. Die Schwenkebene des Exzenterhebels 6b wird aufgespannt durch Längsrichtung und Hochrichtung der nicht dargestellten Trägerschiene. Der Gehäuseabschnitt 14 ist lösbar mit dem Radschalengehäuse verbindbar. Der Gehäuseabschnitt 14 dient als Blende im Bereich der Auflagefläche des Radschalengehäuses, um zu verhindern, dass Verschmutzungen im Bereich der Auflagefläche des Radschalengehäuses ins Innere der Radschale 3b dringen und zu Funktionsstörungen der Exzenterspanneinheit führen können. Anhand der Fig. 7 und 8 ist eine Spannstellung des Exzenterhebels 6b dargestellt und damit eine Klemmstellung des Klemmstücks 7b. Bei einer Schwenkbewegung nach oben entlang des Schlitzes 16 wird der Exzenterhebel 6b in seine Lösestellung überführt, in der das Klemmstück 7b nach unten bewegt ist und sich in Hochrichtung von entsprechenden Hinterschnitten der Führungsnut der Trägerschiene entfernt.

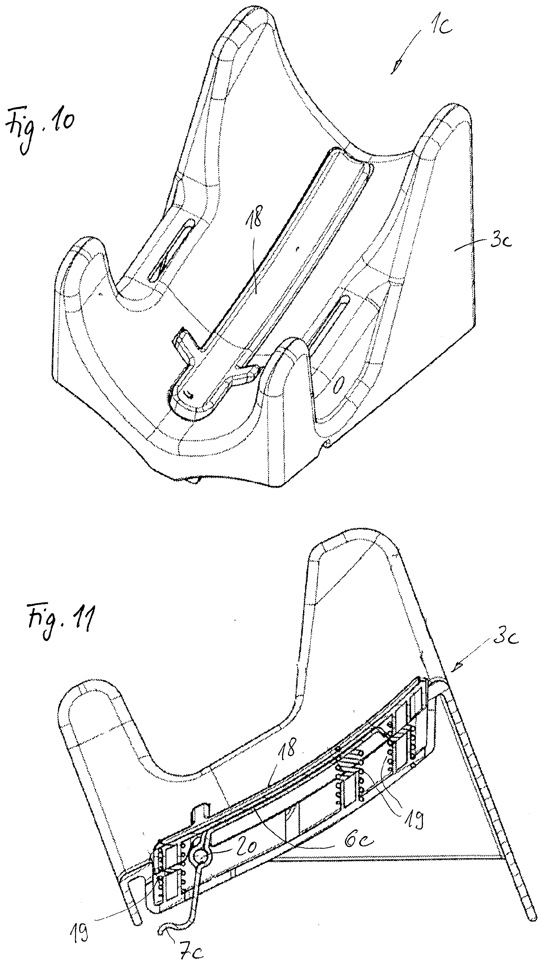

Das Trägersystem 1c nach den Fig. 10 bis 12 nutzt indirekt, d.h. mittelbar, ein Spannprinzip, wie es bei den Ausführungsformen gemäß den Fig. 1 bis 6 eingesetzt wird. Im Übrigen entspricht der Einsatzzweck des Trägersystems 1c wie auch des Trägersystems 1b nach den Fig. 7 bis 9 dem Einsatzzweck der zuvor anhand der Fig. 1 bis 6 beschriebenen Ausführungsformen. Zur Vermeidung von Wiederholungen wird daher auf die vorherigen Ausführungen Bezug genommen.

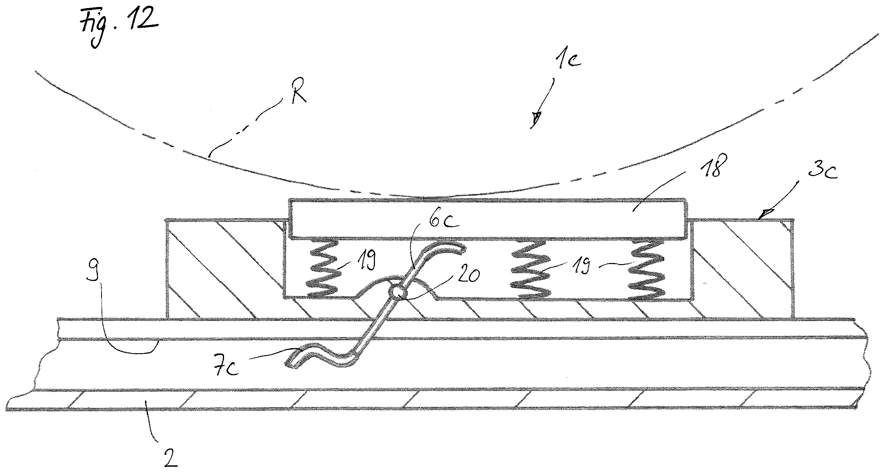

Im Bereich einer Auflagefläche des Radschalengehäuses der Radschale 3c weist das Trägersystem 1c eine Aussparung auf, in der ein hubbeweglicher Kontaktkörper 18 angeordnet ist. Der Kontaktkörper 18 erstreckt sich in Längsrichtung der Radschale 3c über nahezu eine gesamte Länge der Auflagefläche des Radschalengehäuses für ein entsprechendes Rad R. Der Kontaktkörper 18 ist in der Aussparung des Radschalengehäuses hubbeweglich gelagert und permanent in Hochrichtung nach oben federbelastet durch mehrere Druckfedern 19, die gehäuseseitig im Radschalengehäuse der Radschale 3c abgestützt sind (siehe Fig. 11 und 12). Damit ist der Kontaktkörper 18 federelastisch beweglich. Der Kontaktkörper 18 ist im Bereich seiner Unterseite in Kontakt mit einer Trägereinheit 6c, die als großflächige Blattfeder ausgeführt ist und um ein gehäusefestes Schwenklager 20 schwenkbeweglich gelagert ist. Die Trägereinheit 6c trägt ein Klemmstück 7c, das als einteiliger Abschnitt der Blattfeder ausgeführt ist. Wenn nun durch das Aufsetzen des Reifens eines Rads des Zweirads auf den Kontaktkörper 18 schräg von oben eine Druckkraft ausgeübt wird, weicht der Kontaktkörper 18 in die Aussparung des Radschalengehäuses hinein nach unten aus, wodurch die die Trägereinheit 6c bildende Blattfeder nach unten mitgenommen wird. Dabei verschwenkt zwangsläufig der untere Endbereich der Blattfeder, der das Klemmstück 7c bildet, um die Schwenkachse 20 nach oben und legt sich im Bereich der Hinterschnitte 9 an die entsprechenden Nutschenkel der T-förmigen Führungsnut der Trägerschiene 2 an. Hierdurch wird die gewünschte Klemmwirkung erzielt. Die Aufrechterhaltung der Klemmwirkung erfolgt durch eine nicht dargestellte Kombination aus einem Sicherungsband und einer ratschenförmigen Sicherungseinheit. Die entsprechenden schlitzförmigen Aufnahmen zur Montage eines Sicherungsbandes und einer gegenüberliegenden Sicherungseinheit am Radschalengehäuse sind in Fig. 10 erkennbar. Sicherungsband und Sicherungseinheit sind vorteilhaft so gestaltet, wie dies anhand der Fig. 1 erkennbar ist. Bei einem Entfernen des Rads R drücken die Druckfedern 19 den Kontaktkörper 18 zwangsläufig wieder nach oben, wodurch das Klemmstück 7c zwangsläufig wieder in seine nach unten verschwenkte Ausgangslage zurückbewegt wird und demzufolge wieder seine Freigabestellung einnimmt.

## Patentansprüche

1. Trägersystem (1 bis 1c) für ein Zweirad mit einer Trägerschiene (2) sowie mit einer Radschale (3 bis 3c) zur Stützung eines Rads (R) des Zweirads, die auf der Trägerschiene (2) verschiebbar geführt ist, und der eine Arretiereinrichtung zur Positionsfixierung der Radschale (3 bis 3c) an der Trägerschiene (2) zugeordnet ist, **dadurch gekennzeichnet, dass** die Arretiereinrichtung als manuell bedienbare Schnellspanneinrichtung ausgebildet ist.

2. Trägersystem (1b) nach Anspruch 1, **dadurch gekennzeichnet, dass** die Schnellspanneinrichtung als Exzenterspanneinheit gestaltet ist und einen manuell bedienbaren Exzenterhebel (6b) aufweist, der in Hochrichtung nach unten in eine Sperrstellung und in Hochrichtung nach oben in eine Freigabestellung überführbar ist.

3. Trägersystem (1b) nach Anspruch 2, **dadurch gekennzeichnet, dass** der Exzenterhebel (6b) innerhalb eines Gehäuseabschnitts (14) eines Radschalengehäuses der Radschale (3b) angeordnet ist und durch eine Öffnung (16) des Gehäuseabschnitts (14) derart über den Gehäuseabschnitt (14) nach außen abragt, dass der Exzenterhebel (6b) manuell ergreifbar ist.

4. Trägersystem (1b) nach Anspruch 3, **dadurch gekennzeichnet, dass** der Gehäuseabschnitt (14) lösbar an dem Radschalengehäuse gehalten ist.

5. Trägersystem (1, 1a, 1c) nach Anspruch 1, sowie mit einem dem Radschalengehäuse zugeordneten Sicherungsband (4, 4a, 4c) für ein Rad (R) des Zweirads und einer das Sicherungsband (4, 4a, 4c) in einer Sicherungsstellung aufnehmenden und spannenden Sicherungseinheit (5, 5a, 5c), die an einer dem Sicherungsband (4, 4a, 4c) gegenüberliegenden Seite eines Radschalengehäuses vorgesehen ist, **dadurch gekennzeichnet, dass** die Schnellspanneinrichtung mit dem Sicherungsband (4, 4a,4c) und der Sicherungseinheit (5, 5a, 5c) derart in Wirkverbindung ist, dass eine Positionsfixierung der Radschale (3, 3a, 3c) durch die Schnellspanneinrichtung synchron zu einem Spannen des Sicherungsbands (4, 4a, 4c) in der Sicherungseinheit (5, 5a, 5c) erfolgt.

6. Trägersystem (1, 1a, 1c) nach Anspruch 5, **dadurch gekennzeichnet, dass** die Schnellspanneinrichtung ein Klemmstück (7, 7a, 7c) aufweist, das in der Trägerschiene (2) angeordnet ist und in einer Klemmstellung gegen einen Hinterschnitt (9) der Trägerschiene (2) gepresst ist, dass das Klemmstück (7, 7a, 7c) an einer Trägereinheit (6, 6a, 6c) gehalten ist, die in Hochrichtung beweglich in dem Radschalengehäuse gelagert ist, und dass das Sicherungsband (4, 4a, 4c) und die Sicherungseinheit (5, 5a, 5c) direkt oder indirekt mechanisch mit der Trägereinheit (6, 6a, 6c) gekoppelt sind.

7. Trägersystem nach Anspruch 6, **dadurch gekennzeichnet, dass** die Trägereinheit (6, 6a, 6c) einteilig mit dem Klemmstück (7, 7a, 7c) gestaltet ist.

8. Trägersystem (1, 1a) nach Anspruch 6 oder 7, **dadurch gekennzeichnet, dass** die Trägereinheit (6, 6a) in einer Linearführung des Radschalengehäuses begrenzt hubbeweglich gelagert ist.

9. Trägersystem (1c) nach Anspruch 6 oder 7, **dadurch gekennzeichnet, dass** die Trägereinheit (6c) schwenkbeweglich relativ zu dem Radschalengehäuse gelagert ist, und dass die Trägereinheit (6c) mit einer an dem Radschalengehäuse angeordneten Zwangsführung gekoppelt ist, die eine Bewegung der Trägereinheit (6c) initiiert abhängig von einem Einsetzen des Rads (R) in das Radschalengehäuse.

10. Trägersystem (1c) nach Anspruch 9, **dadurch gekennzeichnet, dass** die Zwangsführung einen federelastisch beweglichen Kontaktkörper (18) aufweist, der in unbelastetem Zustand über eine Auflagefläche des Radschalengehäuses für das Rad (R) nach oben abragt.
